# EUROPÄISCHE PATENTANMELDUNG

(11) **EP 0 937 607 A2**
(43) Veröffentlichungstag der Anmeldung: **25.08.1999**
(21) Anmeldenummer: 99101517.3
(22) Anmeldetag: 28.01.1999
(51) Int. Cl.: B60R 7/08

(54) **Innenverkleidung für eine Türe eines Kraftfahrzeugs**

(30) Priorität: 20.02.1998 DE 19807308
(71) Anmelder: Volkswagen Aktiengesellschaft, 38436 Wolfsburg (DE)
(72) Erfinder: Jauch-Paganetti, Michele, 38106 Braunschweig (DE); Soltendieck, Bernd, 38108 Braunschweig (DE)

(57) **Zusammenfassung**

Die Erfindung betrifft eine Innenverkleidung (6) für eine Türe (2) eines Kraftfahrzeugs, mit einer Klemmhalterung für Straßenkarten, Stadtpläne oder dergleichen Kartenmaterial, umlassend ein innenraumseitiges elastisches Andruckelement (26) und ein türseitiges starres Widerlagerelement (12), die einen Spalt (34) zum Einführen des Kartenmaterials begrenzen. Erfindungsgemäß besteht das Andruckelement (26) aus einem steifen Material und überlappt das Widerlagerelement (12) in einem geringen Abstand von dessen innenraumseitiger Oberfläche (32), wobei der Spalt (34) nach mindestens zwei Richtungen hin offen ist, so daß sich im Gebrauch befindliches Kartenmaterial ohne vorheriges Zusammenfalten mühelos mit einer Hand in die Klemmhalterung einführen und wieder aus dieser entnehmen läßt.

## Beschreibung

Die Erfindung betrifft eine Innenverkleidung für eine Türe eines Kraftfahrzeugs, mit einer Klemmhalterung für Straßenkarten, Stadtpläne oder dergleichen Kartenmaterial, umfassend ein innenraumseitiges elastisches Andruckelement und ein türseitiges starres Widerlagerelement, die einen Spalt zum Einführen des Kartenmaterials begrenzen.

Bei Personenkraftwagen neueren Datums bestehen die Innenverkleidungen der Türen überwiegend aus steiferem Material und sind mit verhältnismäßig breiten offenen Ablagefächem versehen, in denen sich beispielsweise ein Straßenatlas, mehrere zusammengefaltete Straßenkarten, Eiskratzer, Parkscheiben oder andere häufiger benutzte Gegenstände unterbringen lassen. Diese Ablagefächer weisen gewöhnlich nur einen verhältnismäßig niedrigen innenraumseitigen Rand auf, so daß sie sich weniger gut als Ablage für eine einzelne, teilweise aufgeschlagene Straßenkarte eignen, die beispielsweise nach ihrem Studium bei einem kurzen Hart an einer Ampel oder Schranke gut zugänglich abgelegt werden soll, das heißt so, daß sie beim nächsten Halt in der aufgeschlagenen Position mit einem Griff wieder aufgenommen werden kann.

Demgegenüber ist von einigen Personenkraftwagen älteren Datums eine auf der Innenseite der Fahrertüre vorgesehene, als Kartentasche ausgebildete Ablage bekannt, die türseitig von einem starten Teil der Innenverkleidung und innenraumseitig von einem flexiblen Stoff, Netz oder Kunststoffmaterial begrenzt wird, dessen oberer horizontaler Rand mit einem elastischen Gummizug versehen ist, um einen zur Aufnahme des Kartenmaterials dienenden Spalt zwischen dem Stoff, Netz oder Kunststoffmaterial und der benachbarten starten Innenverkleidung am oberen Ende geschlossen zu halten. Der elastisch nachgiebige obere Rand der Kartentasche bildet gleichzeitig eine Klemmhalterung für einen nach oben aus der Spaltöffnung überstehenden, nur teilweise in die Tasche eingeführten Faltplan oder dergleichen, so daß dieser bei Bedarf schnell und einfach ergriffen werden kann. Ein wesentlicher Nachteil derartiger, mit einem Gummizug versehener Kartentaschen oder Netzhalterungen besteht jedoch darin, daß sich Kartenmaterial, wie Faltpläne, Straßenkarten oder dergleichen, nicht oder nur schlecht mit einer Hand in die Tasche oder Halterung einführen lassen, ohne den Gummizug mit der anderen Hand von der Türe weg nach innen zu ziehen. Außerdem läßt sich verhältnismäßig weit aufgefaltetes Kartenmaterial nicht ohne vorheriges Zusammenfalten in einer derartigen Tasche unterbringen.

Ausgehend hiervon liegt der Erfindung die Aufgabe zugrunde, eine Innenverkleidung der eingangs genannten Art dahingehend zu verbessern, daß sich im Gebrauch befindliches Kartenmaterial ohne vorheriges Zusammenfalten mühelos mit einer Hand in die Klemmhalterung einführen und wieder entnehmen läßt.

Diese Aufgabe wird erfindungsgemäß dadurch gelöst, daß das Andruckelement aus einem steifen Material besteht und das Widerlagerelement in einem geringen Abstand von dessen innenraumseitiger Oberfläche überlappt, wobei der Spalt nach mindestens zwei Richtungen hin offen ist. Ein in zwei Richtungen offener Spalt zwischen der innenraumseitigen Oberfläche des Widerlagerelements und dem über diese überstehenden Andruckelement erleichtert das Einführen von Kartenmaterial erheblich, weil sich dieses bequem mit einer Hand an der Oberfläche des Widertagerelement entlang in den Spalt einführen läßt, wobei die Bewegungsrichtung beim Einführen entsprechend der Präferenz des Benutzers sowohl von oben nach unten oder in bzw. entgegen der Fahrtrichtung verlaufen kann. Außerdem wird das Andruckelement beim Einführen des Kartenmaterials durch dessen Keilwirkung etwas in Richtung des Innenraums gedrückt und elastisch verformt, so daß zum Festklemmen des Kartenmaterials eine Hand ausreichend ist.

Eine bevorzugte Ausgestaltung der Erfindung sieht vor, daß das Andruckelement aus einem flächig ausgebildeten Teil der Innenverkleidung besteht, der vorzugsweise aus einem elastischen Kunststoffmaterial hergestellt ist und sich im wesentlichen parallel zur innenraumseitigen Oberfläche des Widerlagerteils über einen Teil der Türinnenseite erstreckt, wobei er das vorzugsweise ebenfalls von einem flächigen Teil der Innenverkleidung gebildete Widerlagerelement teilweise überlappt.

Gemäß einer ersten alternativen Ausgestaltung der Erfindung verjüngt sich der zwischen dem Andruckelement und dem Widerlagerelement gebildete Spalt mit zunehmendem Abstand von einer Spaltöffnung an einem freien Rand des Andruckelements, während eine zweite alternative Ausgestaltung der Erfindung vorsieht, daß der Spalt zwischen dem Andruckelement und dem Widerlagerelement außer in der Nähe des abgeschrägten freien Randes eine im wesentlichen gleichbleibende Spaltdicke aufweist.

Eine weitere vorteilhafte Ausgestaltung der Erfindung sieht vor, daß das Andruckelement oder das Widerlagerelement von einen verschließbaren Deckel eines in die Türe integrierten Ablagefachs gebildet werden. In dem zuerst genannten Fall wird das Andruckelement bevorzugt von einem überstehenden Rand des Deckels gebildet, der in der Schließstellung die benachbarte Innenverkleidung überlappt, während in dem zuletzt genannten Fall der Deckel zweckmäßig als Schiebedeckel ausgebildet ist, so daß er sich unter das von einem Teil der benachbarten Verkleidung gebildete überlappende Andruckelement schieben läßt.

Im folgenden wird die Erfindung anhand zweier in der Zeichnung dargestellter Ausführungsbeispiele näher erläutert. Es zeigen:

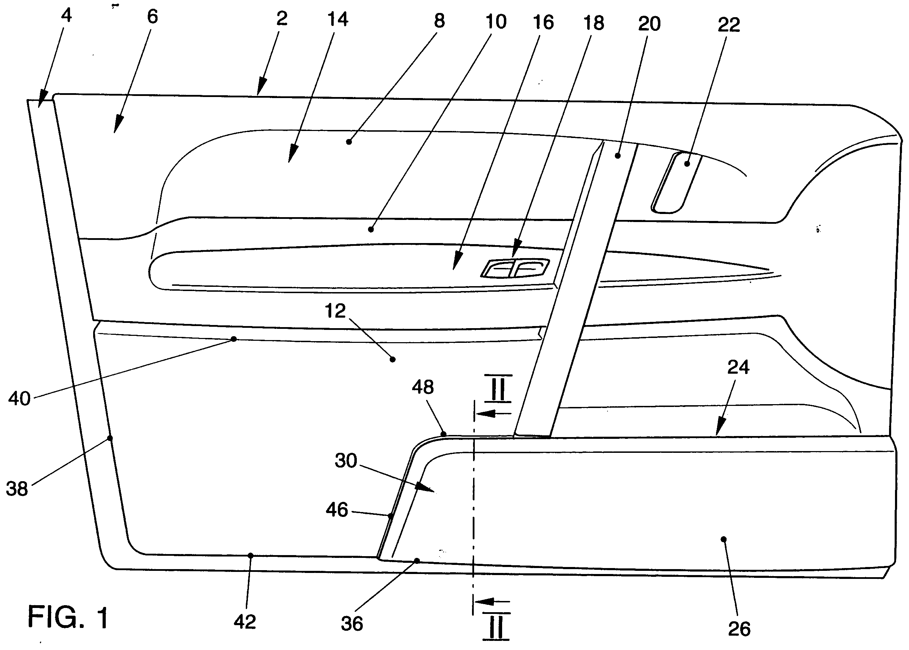

- Fig. 1:: eine Innenseitenansicht eines Teils einer Vordertüre eines Personenkraftwagens, die eine erfindungsgemäße Innenverkleidung mit einer Klemmhalterung für Kartenmaterial aufweist;
- Fig. 2:: eine teilweise geschnittene Ansicht der Türinnenverkleidung im Bereich der Klemmhalterung entlang der vertikalen Linie II-II der Fig. 1.

Die in der Zeichnung teilweise dargestellte Vordertüre 2 eines Personenkraftwagens weist auf ihrer Innenseite eine auf einem Türkörper 4 angebrachte Innenverkleidung 6 auf, die aus mehreren übereinander angeordneten Teilen 8, 10, 12 mit unterschiedlicher Farbgebung und Oberflächenbeschaffenheit besteht. Die beiden oberen Teile 8, 10 der Innenverkleidung 6 begrenzen gemeinsam eine nach außen gewölbte Mulde 14. Die Mulde 14 wird auf ihrer Unterseite von einem horizontalen Sims 16 begrenzt, auf dem eine Schaltereinheit 18 mit mehreren Kippschaltern für einen elektrischen Fensterheber sowie zur Verstellung eines Türaußenspiegels angeordnet sind. In Fahrtrichtung vor dem Sims 16 erstreckt sich ein Haltegriff 20 schräg von oben nach unten über einen Großteil der Innenverkleidung 6 einschließlich der Mulde 14, so daß er im Bereich der Mulde 14 leicht ergriffen werden kann, um die Türe 2 zuzuziehen oder aufzudrücken. Ein vor dem Haltegriff 18 angeordneter Türöffner 22 dient zur Entriegelung der Türe 2 von innen.

Der untere Teil 12 der Innenverkleidung 6 enthält in Fahrtrichtung vor dem Haltegriff 18 ein breites, nach oben offenes Ablagefach 24, das innenraumseitig von einem auf den Türkörper 4 aufgeclipsten flachen Kunststoffteil 26 begrenzt wird. Das steile Kunststoffteil 26 erstreckt sich bis über das untere Ende des Haltegriffs 18 hinaus nach hinten und überlappt dort mit seinem hinteren Ende innenraumseitig den unteren Teil 12 der Innenverkleidung 6

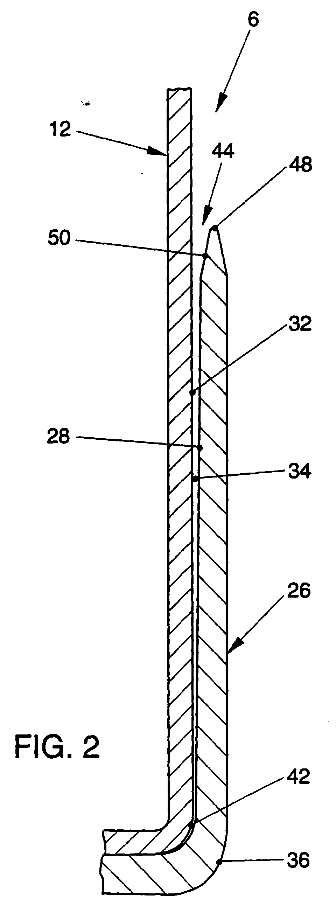

Wie am besten in Fig. 2 dargestellt, ist eine nach außen weisende, d.h. türseitige Oberfläche 28 des Kunststollteils 24 im Bereich der Überlappung 30 in einem geringen Abstand von der ebenen, nach innen weisenden, d.h. innenraumseitigen Oberfläche 32 des unteren Teils 12 der Innenverkleidung 6 angeordnet, so daß zwischen diesen ein Spalt 34 gebildet wird, der als Klemmhalterung für einen geöffneten Faltplan oder anderes Kartenmaterial (nicht dargestellt) benutzt werden kann. Hinter dem Haltegriff 18 ist das Kunststoffteil 26 nur an seinem unteren Rand 36 am Türkörper 4 befestigt, so daß der Spalt 34 nach oben und nach hinten zu, d.h. entgegen der Fahrtrichtung offen ist.

Die innenraumseitige Oberfläche 32 des unteren Teils 12 der Innenverkleidung 6 verläuft von ihrem hinteren und oberen Rand 38 bzw. 40 nach vorne zu bis zum Haltegriff 18 und nach unten zu bis zu ihrem unteren Rand 42 bzw. bis zum unteren Rand 36 des Kunststoffteils 24, d.h. auch innerhalb des Überlappungsbereichs 30, im wesentlichen in einer durchgehenden vertikalen Ebene. Ein zusammengefalteter oder geöffneter Faltplan, der vorübergehend in der Klemmhalterung untergebracht werden soll, kann somit zwischen das Kunststoffteil 26 und den unteren Teil 12 der Verkleidung 6 geschoben werden, wobei er ohne weiteres Zutun von selbst in den Spalt 34 eindringt, wenn seine Vorderkante an der Oberfläche 32 des unteren Teils 12 der Verkleidung entlang nach vorne und/oder unten unter das Kunststoffteil 26 bewegt wird.

Das Material des steilen oder starren Kunststoffteils 24 ist so gewählt, daß es begrenzt elastisch verformbar ist. Beim Einführen des Faltplans in den Spalt 34 biegt sich somit das Kunststoffteil durch die Keilwirkung der Vorderkante des eindringenden Faltplans im Bereich der Überlappung 30 etwas nach außen, d.h. weg von der vom Kunststoffteil 26 überlappten Oberfläche 32, so daß der Faltplan anschließend durch die elastische Rückstellkraft des Materials infolge der Verformung zwischen den Kunststoffteil 26 und der Oberfläche 32 im Spalt 34 festgeklemmt wird.

Das Kunststoffteil 26 kann entlang des unteren und vorderen Randes des Überlappungsbereichs 30 dünner ausgebildet sein (nicht dargestellt), so daß es sich dort leichter verbiegen läßt.

Wie am besten in Fig. 2 dargestellt, ist der Spalt 34 so ausgebildet, daß er sich von einer Spaltöffnung 44 am hinteren bzw. oberen Rand 46 bzw. 48 des Kunststoffteils 24 aus gleichmäßig nach unten und nach vorne in Fahrtrichtung verjüngt, so daß das von der Klemmhalterung aufzunehmende Kartenmaterial in Abhängigkeit von seiner Dicke unterschiedlich weit in den Spalt 34 eindringt. Dies ist von Vorteil, weil dadurch dünne auseinandergefaltete Karten verhältnismäßig weit in den Spalt 34 eindringen können und somit auf einem möglichst großen Teil ihrer Breitseitenfläche festgehalten werden, während gleichzeitig verhindert wird, daß dickere zusammengefaltete Karten mit kleineren Außenabmessungen als denjenigen des Überlappungsbereichs 30 ganz im Spalt 34 verschwinden können.

Der hintere und der obere Rand 46, 48 des Kunststoffteils 26 bilden eine vorspringende Ecke, die es gestattet, Kartenmaterial je nach Präferenz des Benutzers sowohl von oben als auch von hinten unter das Kunststoffteil 26 zu schieben. Die beiden Ränder 46, 48 weisen außerdem eine türseitige Abschrägung 50 auf, die den vorderen Rand von zusammengefaltetem Kartenmaterial während des Einführens in die Klemmhalterung etwas zusammendrückt, so daß es bei gleicher Kraftausübung weiter in den Spalt 34 eindringt.

## Patentansprüche

1. Innenverkleidung für eine Türe eines Kraftfahrzeugs, mit einer Klemmhalterung für Straßenkarten, Stadtpläne oder dergleichen Kartenmaterial, umfassend ein innenraumseitiges elastisches Andruckelement und ein türseitiges starres Widerlagerelement, die einen Spalt zum Einführen des Kartenmaterials begrenzen, dadurch gekennzeichnet, daß das Andruckelement (26) aus einem steilen Material besteht und das Widerlagerelement (12) in einem geringen Abstand von dessen innenraumseitiger Oberfläche (32) überlappt, wobei der Spalt (34) nach mindestens zwei Richtungen hin offen ist.

2. Innenverkleidung nach Anspruch 1, dadurch gekennzeichnet, daß das Andruckelement von einem flächigen Teil (26) der Innenverkleidung (6) gebildet wird.

3. Innenverkleidung nach Anspruch 1 oder 2, dadurch gekennzeichnet, daß das Andruckelement von einer innenraumseitigen Begrenzung (26) eines in die Türe (2) integrierten Ablagefachs (24) gebildet wird, die einen benachbarten Bereich der Innenverkleidung (6) überlappt.

4. Innenverkleidung nach einem der Ansprüche 1 bis 3, dadurch gekennzeichnet, daß das Widerlagerelement von einem flächigen Teil (12) der Innenverkleidung (6) gebildet wird.

5. Innenverkleidung nach einem der Ansprüche 1 bis 4, dadurch gekennzeichnet, daß der Spalt (34) eine von einem freien Rand (46, 48) des Andruckelements (26) und der Oberfläche (32) des Widerlagerelements (12) begrenzte, nach oben sowie in Fahrtrichtung und/oder entgegen der Fahrtrichtung weisende Öffnung (44) aufweist.

6. Innenverkleidung nach einem der Ansprüche 1 bis 5, dadurch gekennzeichnet, daß sich der Spalt (34) mit zunehmendem Abstand von einer zwischen einem freien Rand (46, 48) des Andruckelements (26) und der Oberfläche (32) des Widerlagerelements (12) gebildeten Spaltöffnung (44) verjüngt.

7. Innenverkleidung nach einem der Ansprüche 1 bis 6, dadurch gekennzeichnet, daß ein freier Rand (46, 48) des Andruckelements (26) auf seiner der Oberfläche (30) des Widerlagerelements (12) zugewandten Seite ein Abschrägung (50) aufweist.

8. Innenverkleidung nach einem der Ansprüche 1 bis 7, dadurch gekennzeichnet, daß vom Andruckelement (26) überlappte und an das Andruckelement (26) angrenzende Bereiche der Oberfläche (32) des Widerlagerelements (12) miteinander fluchten.

9. Innenverkleidung nach einem der Ansprüche 1 bis 8, dadurch gekennzeichnet, daß das Andruckelement von einem überstehenden Rand eines Deckels eines verschließbaren Ablagefachs gebildet wird.

10. Innenverkleidung nach einem der Ansprüche 1 bis 9, dadurch gekennzeichnet, daß das Widerlagerelement von einem Deckel eines verschließbaren Ablagefachs gebildet wird.

11. Innenverkleidung nach einem der Ansprüche 1 bis 10, dadurch gekennzeichnet, daß mindestens ein unterer Rand (36) des Andruckelements (26) fest mit einem Körper (4) der Türe (2) oder mit dem Widerlagerelement (12) verbunden ist.

12. Kraftfahrzeug mit einer Türe und einer auf der Türe angebrachten Innenverkleidung nach einem der Ansprüche 1 bis 11.
